Europäisches Patentamt

European Patent Office

Office européen des brevets

(11) Veröffentlichungsnummer: **0 233 569 B1**

# (12) EUROPÄISCHE PATENTSCHRIFT

(45) Veröffentlichungstag der Patentschrift: **10.04.91**

(51) Int. Cl.⁵: **B29C** 47/00, B32B 7/02

(21) Anmeldenummer: **87101739.8**

(22) Anmeldetag: **09.02.87**

(54) **Verfahren zur Herstellung von flächigem Halbzeug.**

(30) Priorität: **15.02.86 DE 3604829**

(43) Veröffentlichungstag der Anmeldung:
**26.08.87 Patentblatt 87/35**

(45) Bekanntmachung des Hinweises auf die
Patenterteilung:
**10.04.91 Patentblatt 91/15**

(84) Benannte Vertragsstaaten:
**BE CH DE FR GB IT LI SE**

(56) Entgegenhaltungen:
**DE-C- 659 706            FR-A- 2 224 285**
**GB-A- 1 480 219          GB-A- 1 526 723**
**US-A- 3 266 093          US-A- 4 333 907**

(73) Patentinhaber: **BASF Aktiengesellschaft**
**Carl-Bosch-Strasse 38**
**W-6700 Ludwigshafen(DE)**

(72) Erfinder: **Portugall, Michael Dr.**
**Raiffeisenstrasse 7**
**W-6706 Wachenheim(DE)**
Erfinder: **Schumacher, Franz**
**Weinbietstrasse 24**
**W-6718 Gruenstadt(DE)**
Erfinder: **Seiler, Erhard Dr.**
**Erpolzheimer Strasse 1**
**W-6700 Ludwigshafen(DE)**

## Beschreibung

Die Erfindung betrifft ein Verfahren zur Herstellung von flächigem, thermoplastisch verformbarem Halbzeug auf Basis von flüssig-kristallinen Polymeren, bestehend aus zwei oder mehreren Schichten, in denen das Polymere in unterschiedlichen Richtungen orientiert ist.

Es sind eine Reihe von polymeren Verbindungen bekannt, die in der Schmelze durch Orientierung von flüssigkristallinen Bereichen anisotrope Eigenschaften zeigen, welche auch in festem Zustand noch bewahrt werden können, so daß sie in einer Vorzugsrichtung erhöhte mechanische Eigenschaften aufweisen. Diese flüssig-kristallinen Polymeren sind z.B. beschrieben in "Polymer Liquid Cristals" Ciferri, Krigbaum, Meyer, Academic Press, 1982. Extrudiert man die Schmelze eines flüssig-kristallinen Polymeren aus der Breitschlitzdüse eines üblichen Folienextruders, so sind auch in der dabei erhaltenen Folie ausgeprägte Orientierungen in Auspreßrichtung festzustellen. Durch Verstrecken der Folie in Abzugsrichtung kann die dadurch bedingte Anisotropie der mechanischen Eigenschaften noch verstärkt werden.

In der EP-A-72 210 sind multiaxial orientierte Laminate beschrieben, die aus mehreren Schichten flüssig-kristalliner Polymerer bestehen, in denen die Polymeren in unterschiedlichen Richtungen orientiert sind. Zur Herstellung dieses Halbzeugs wird eine Folie aus einem flüssig-kristallinen Polymeren so extrudiert, daß das Polymere sich orientiert. Nach der Abkühlung der Folie wird diese in Abschnitte zerschnitten und mehrere solcher Abschnitte werden so übereinanderdrapiert, daß die einzelnen Schichten unterschiedliche Orientierung aufweisen, beispielsweise in einem Winkel von 90°. Schließlich werden die Schichten bei Temperaturen oberhalb der Erweichungstemperatur des Polymeren miteinander verbunden.

Es hat sich nun gezeigt, daß so hergestellte, insbesondere mehrlagige Laminate, z.B. Platten, Delaminierungserscheinungen zeigen, wenn man sie einer mehrachsigen Belastung unterwirft. Die gleiche Erscheinung beobachtet man auch, wenn man das multiaxial orientierte Halbzeug durch thermoplastisches Umformen weiterverarbeitet.

Der Erfindung lag nun die Aufgabe zugrunde, multiaxial orientiertes Halbzeug herzustellen, welches diese Erscheinungen nicht aufweist.

Diese Aufgabe wird gelöst, wenn man flüssigkristallines Polymeres in einem Extruder aufschmilzt, die Schmelze in zwei oder mehrere Teilströme zerlegt, in denen dem Polymeren eine unterschiedliche Orientierung aufgeprägt wird, die Teilströme wieder vereinigt, bevor das Polymere sich verfestigt, und den vereinigten Schmelzestrom zu einem flächigen Halbzeug auspreßt.

Dieses flächige Halbzeug besteht aus zwei oder mehreren Schichten, in denen das Polymere in unterschiedlichen Richtungen orientiert ist. Diese Schichten sind überraschenderweise so gut miteinander verbunden, daß keine Delaminierungserscheinungen auftreten.

Thermotrope flüssigkristalline Polymere sind bekannt. Es handelt sich hierbei um voll- oder teilaromatische Polykondensate wie Polyester, Polyesteramide, Polyetherester, Polyestercarbonate, Polyesteramidimide und ähnliche Polymere. Der Begriff "vollaromatisch" bedeutet hierbei, daß jede im Polymeren vorkommende Monomereinheit mit wenigstens einem aromatischen Ring zum Aufbau der Polymerkette beiträgt. Der Begriff "teilaromatisch" bedeutet, daß ein Teil der die Kette aufbauenden Monomerstrukturen nicht aromatisch, d.h. im allgemeinen aliphatisch (linear oder cyclisch) ist.

Die oben erwähnten Polymerklassen enthalten eine Reihe der für die Erfindung geeigneten flüssigkristallinen Polymeren, die Auflistung hat aber keinerlei Ausschließlichkeitscharakter; zudem besitzen nicht alle Polymeren der oben aufgeführten Polymerklassen eine flüssigkristalline Phase.

Die Existenz einer flüssigkristallinen Phase in der jeweiligen Polymerschmelze und damit die Eignung des Materials zum erfindungsgemäßen Einsatz läßt sich mit Hilfe der Polarisationsmikroskopie nachweisen. Die Methode ist in der DE-AS 2520819 ausführlich beschrieben. Zwischen gekreuzten Polarisatoren weisen die Polymerschmelzen, die in einer Schichtdichte von ca. 10 µm zwischen Glasplatten aufgebracht werden, Texturen auf, die mesomorphen Phasen zugeordnet werden können. Eine ausführliche Zusammenstellung der in Frage kommenden Polymeren ist in EP-A 1 340, EP-A 129372, EP-A 131846 und EP-A 139303 enthalten. Die hier zitierte Auswahl soll jedoch nur beispielgebend und nicht einschränkend verstanden werden.

Die bevorzugten Polymeren bilden eine flüssigkristalline Phase unterhalb von 400°C; bevorzugt sind solche, die eine flüssigkristalline Phase unterhalb von 360°C bilden. Besonders bevorzugt sind vollaromatische Polyester oder vollaromatische Polyesteramide.

Bei dem erfindungsgemäßen Verfahren wird das flüssig-kristalline Polymere in einem üblichen Extruder aufgeschmolzen, vorzugsweise bei Temperaturen von 100 bis 250°C über der Glastemperatur des Polymeren. In einer speziell konstruierten Extrusionsdüse wird der vom Extruder kommende Schmelzestrom in zwei oder mehrere, vorzugsweise 2 bis 5 Teilströme aufgeteilt, die durch getrennte Kanäle fließen. Diese Kanäle sind mit Leiteinrichtungen versehen, durch die der entsprechende Schmelzestrom aus der ursprünglichen Richtung abgelenkt wird. Die so in einem vorgegebenen Winkel in entgegengesetzter Richtung umgelenkten Teilströme mit den in Strömungsrichtung orientierten Makromolekülen werden kurz vor der Ausgangsöffnung der Düse wieder zusammengeführt. Die so wieder zusammengeführten · mindestens zwei Teilströme bilden einen einheitlichen Schmelzestrom, der aus mindestens zwei Schichten besteht, die mit unterschiedlich orientierten Makromolekülen in diesen Schichten aus dem Düsenspalt austreten.

Das Eigenschaftsbild des so erzeugten flächigen Halbzeugs kann durch Variation der Zahl der Schmelzeschichten und der Strömungswinkel dieser Schichten zueinander variiert werden.

Eine geeignete Vorrichtung ist in der DE-A 36 03 432 beschrieben.

Im Anschluß an die Extrusion kann die Folie gegebenenfalls nach üblichen Methoden gereckt werden, wobei die Anisotropie verschiedener Eigenschaften der resultierenden Folie vergrößert wird.

Das erfindungsgemäß hergestellte flächige Halbzeug liegt in Form von Folien oder Platten mit einer Dicke zwischen 0,05 und 10 mm, vorzugsweise von 0,5 bis 5 mm vor. Es kann durch thermoplastische Umformung, wie in EP-A-95 865 beschrieben, zu Fertigteilen mit hoher mechanischer Beanspruchbarkeit verarbeitet werden.

Beispiele

Ein Copolyester aus 7,7 Mol% Hydrochinon
7,7 Mol% 4,4'-Dihydroxibiphenyl,
15,4 Mol% 2,7-Dihydroxinaphthalin
30,8 Mol% Terephthalsäure
38,4 Mol% 4-Hydroxibenzoesäure
mit einer inhärenten Viskosität von 1.94 dl/g (gemessen in 0,1 %iger Lösung in Pentafluorphenol bei 60° C) wurde bei einer Massetemperatur von 300° folgendermaßen zu einem Film extrudiert:

Der Massestrom wird in der Vorrichtung nach DE-A 36 03 432 in drei Teilströme aufgeteilt, die in sich konvergierend verjüngenden Kanäle geführt werden. Der mittlere Teilstrom wird in Extrusions-Richtung belassen; der obere Teilstrom wird so gelenkt, daß er, in Extrusionsrichtung gesehen, in einen Winkel von 90° von links auf den mittleren Strom auftrifft, der untere Teilstrom trifft in einem Winkel von 90° von rechts auf den mittleren Strom auf. Der extrudierte Film ist 40 cm breit und 300 μm dick.

Ein Folienabschnitt von 30 × 30 cm wurde einem Thermoformprozeß unterworfen, dabei wurden konische Becher einer Höhe von 4,3 mm und mit einem Bodendurchmesser von 6 cm und einem Randdurchmesser von 7 cm geformt. Die erhaltenen Becher sind mechanisch belastbar und zeigen keine Delaminierungseffekte.

Beispiel 2 (Vergleichsbeispiel)

Aus dem Copolyester nach Beispiel 1 wurde in einem üblichen Folienextruder mit einfacher Breitschlitzdüse bei 300° C Massetemperatur ein 40 cm breiter, 100 μm dicker Film extrudiert.

Drei Folienabschnitte von 30 × 30 cm wurden so übereinanderdrapiert, daß sich jeweils ein Winkel von 90° bezüglich der Extrusionsrichtung des Films ergab.

Das Gelege wurde 10 min bei 200° C und 40 bar verpreßt. Es entstand ein 300 μm dickes Laminat. Dieses wurde, wie in Beispiel 1 beschrieben, zu einem Becher verformt. Dieser zeigte schon bei geringer Druckbelastung Delaminierungseffekte, wobei sich teilweise sogar die einzelnen Schichten voneinander lösten.

## Ansprüche

1. Verfahren zur Herstellung von flächigem, thermoplastisch verformbarem Halbzeug auf Basis von flüssig-kristallinen Polymeren, bestehend aus zwei oder mehreren Schichten, in denen das Polymere in unterschiedlichen Richtungen orientiert ist, dadurch gekennzeichnet , daß man in einem Extruder das Polymere aufschmilzt, die Schmelze in zwei oder mehrere Teilströme zerlegt, in denen dem Polymeren eine unterschiedliche Orientierung aufgeprägt wird, die Teilströme wieder vereinigt, bevor das Polymere sich verfestigt, und den vereinigten Schmelzestrom zu dem flächigen Halbzeug auspreßt.

## Claims

1. A process for producing a sheetlike[1] thermoplastically moldable preshape based on a liquid-crystalline polymer and composed of two or more layers in which the polymer is oriented in different directions, which comprises melting the polymer in an extruder, dividing the melt into two or more separate streams, then conferring different directions of orientation on the polymer in the separate streams, recombining the separate streams before the polymer solidifies, and extruding the recombined melt stream as a sheetlike preshape.

**Revendications**

1. Procédé de fabrication d'un demi-produit plat, pouvant être formé ou moulé à l'état thermoplastique, à base de polymères liquides-cristallins, qui se compose de deux ou plusieurs couches, dans lesquelles le polymère est orienté en des directions différentes, caractérisé en ce que l'on fait fondre le polymère dans une extrudeuse, on subdivise la masse fondue en deux ou plus de deux courants partiels, dans lesquels on imprime au polymère une orientation différente, on réunit à nouveau les courants partiels avant que le polymère se durcisse et on comprime le courant fondu réuni en le demi-produit plat.